# EUROPEAN PATENT SPECIFICATION

(11) **EP 2 725 765 B1**
(45) Date of publication and mention of the grant of the patent: **06.04.2016**
(21) Application number: 12190462.7
(22) Date of filing: 29.10.2012
(51) Int. Cl.: H04L 29/12, H04L 29/06

(54) **Method and system for TCP turn operation behind a restrictive firewall**
Verfahren und System für den TCP-Drehbetrieb hinter einer restriktiven Firewall
Procédé et système pour fonctionnement sur protocole TCP derrière un pare-feu restrictif

(43) Date of publication of application: 30.04.2014
(73) Proprietor: BlackBerry Limited, Waterloo, ON N2K 0A7 (CA)
(72) Inventor: Xie, Kaiduan, Waterloo Ontario N2L 3W8 (CA); Preiss, Bruno Richard, Waterloo Ontario N2L 3W8 (CA); Sau, Jonathan Hong-Man, Waterloo Ontario N2L 3W8 (CA)
(74) Representative: Moore, Barry

(56) References cited:
- US-A1- 2006 215 684
- MAHY UNAFFILIATED P MATTHEWS ALCATEL-LUCENT J ROSENBERG JDROSEN NET R: "Traversal Using Relays around NAT (TURN): Relay Extensions to Session Traversal Utilities for NAT (STUN); rfc5766.txt", TRAVERSAL USING RELAYS AROUND NAT (TURN): RELAY EXTENSIONS TO SESSION TRAVERSAL UTILITIES FOR NAT (STUN); RFC5766.TXT, INTERNET ENGINEERING TASK FORCE, IETF; STANDARD, INTERNET SOCIETY (ISOC) 4, RUE DES FALAISES CH- 1205 GENEVA, SWITZERLAND, 29 April 2010 (2010-04-29), pages 1-67, XP015070780, [retrieved on 2010-04-29]

## Description

### FIELD OF THE DISCLOSURE

The present disclosure relates to transmission control protocol (TCP) connections between a Client and Peer, and in particular to TCP connections between a Client and a Peer where the Client is behind a network address translator (NAT) and restrictive firewall.

### BACKGROUND

A network address translator (NAT) enhances the security of the network by obscuring the internet protocol (IP) addresses of nodes on the network, thus preventing the nodes from being directly reachable from outside of the network. However, the NAT may also cause issues in real time communications because nodes within the network may not be directly able to receive incoming calls, sessions, communications, dialogs or transactions from outside the network.

The NAT may also be co-located with a firewall. In order to overcome the hindrance caused by a NAT/firewall, various solutions exist. Session Traversal Utilities for NAT (STUN), as defined by the Internet Engineering Task Force (IETF) Request For Comments (RFC) 5389, *"Session Traversal Utilities For NAT (STUN)"* provides a way for a Client software on an IP node to learn its assigned address and port on the NAT observed from other networks outside of its network, such as IP nodes on the other side of the NAT. Due to the varieties and complexity of the NAT/firewall functions, STUN itself is not enough to allow incoming traffic to traverse a NAT.

Traversal Using Relays Around NAT (TURN), as defined in IETF RFC 5766, *"Traversal Using Relays Around NAT (TURN): Relay Extensions To Session Traversal Utilities for NAT (STUN)"* introduces a "Man-In-The-Middle" type server that relays, proxies, or transfers the IP data traffic on behalf of a Client behind the NAT, thus allowing that Client to be reachable from the other side of the NAT. A TURN server relays the traffic between two communicating points. The TURN protocol allows a host behind a NAT, herein called a TURN Client, to request that another host called the TURN Server acts as a relay. TURN is an extension of STUN and most TURN messages have the same formatting as their STUN equivalents.

TURN does not provide a way to communicate a Client's relayed transport address to its Peers, nor does it provide a way for the Client to learn each Peer's external facing IP address and port, which would be a "server-reflexive transport address" if the Peer is also behind a NAT. Other protocols and solutions exists for such communications, including session initiation protocol (SIP) and Interactive Connectivity Establishment (ICE), as defined in IETF RFC 5245, "*Interactive Connectivity Establishment (ICE): A Protocol For Network Address Translator (NAT) Traversal For Offer*/*Answer Protocols".*

However, in some networks, a firewall may restrict TCP connections to use only certain ports. This may be done, for example, for security or privacy reasons. For example, in some networks only TCP ports 80 and 443 may be open for TCP. TCP port 80 is typically used for the hypertext transfer protocol (HTTP) and port 443 is typically used for HTTP with transport layer security (TLS), also known as HTTPS. Such ports may only be allowed for outbound TCP connections in order to enable users to access the World Wide Web but nothing else. Other ports may be allowed in addition to, or alternatively to, those above. The restriction of ports is common in many corporate or enterprise network environments, which are referred to herein as a "restricted-access network environments".

In a restricted-access network environment, a TCP TURN Server Solution may not work since the TCP TURN Server assigns Clients unique ports to uniquely identify the Client, and such port access may be restricted through the firewall.

The following document, Mahy, R., Matthews, P., Rosenberg, J., "Traversal Using Relays around NAT (TURN): Relay Extensions to Session Traversal Utilities for NAT (STUN)", Internet Engineering Task Force, IETF; Standard, Internet Society (ISOC) 4, Rue des Falaises CH- 1205 Geneva, Switzerland, 29 April 2010 (2010-04-29), pages 1-67, XP015070780, defines a protocol, called TURN (Traversal Using Relays around NAT). If a host is located behind a NAT, then in certain situations it can be impossible for that host to communicate directly with other hosts (peers). In these situations, it is necessary for the host to use the services of an intermediate node that acts as a communication relay. This specification defines a protocol, called TURN (Traversal Using Relays around NAT), that allows the host to control the operation of the relay and to exchange packets with its peers using the relay. TURN differs from some other relay control protocols in that it allows a client to communicate with multiple peers using a single relay address.

U.S. Pat. App. Pub. No. 2006/0215684 provides a system and a protocol to enable two TCP peers that exist behind one or more firewalls and NATs to automatically setup a true peer-to-peer TCP connection and exchange data without making changes to the firewall or NAT devices or existing TCP-based applications. In embodiments of this invention, the synchronization between the blind TCP peers is achieved using a system that consists of a registration server, an agent application, and a virtual network interface that together relay and replicate the control signals between the two TCP peers. In addition, embodiments of this invention are also used to traverse the NAT and establish a bi-directional peer-to-peer TCP connection in the firewall.

### BRIEF DESCRIPTION OF THE DRAWINGS

The present disclosure will be better understood with reference to the drawings, in which:
**Figure 1** is a block diagram showing an example network architecture for communication between a client and a peer using a TURN server;
**Figure 2** is an exemplary data flow diagram showing initialization of a client to a TURN server;
**Figure 3** is an exemplary data flow diagram showing establishment of a connection from a client to a peer through a TCP TURN server;
**Figure 4** is an exemplary data flow diagram showing establishment of a connection from a peer to a client through a TCP TURN server;
**Figure 5** is an exemplary data flow diagram showing initialization of a client to a TURN server through a restrictive access firewall;
**Figure 6** is an exemplary data flow diagram showing establishment of a connection from a client to a peer through a TCP TURN server through a restrictive access firewall;
**Figure 7** is an exemplary data flow diagram showing establishment of a connection from a peer to a client through a TCP TURN server through a restrictive access firewall;
**Figure 8** is an exemplary data flow diagram showing establishment of a connection from a peer to a client through a pair of TCP TURN servers; and **Figure 9** is a simplified block diagram of an example computing device.

### DETAILED DESCRIPTION OF THE DRAWINGS

The present disclosure provides a method at a computing client located behind a network address translator (NAT) and firewall, the method comprising: establishing a control connection with a transmission control protocol (TCP) Traversal Using Relays Around NAT (TURN) server utilizing a port capable of traversing the firewall; requesting an allocation of a client service identity from the TCP TURN server; and receiving, from the TCP TURN server, a response containing the client service identity, wherein the client service identity is independent of any port used to communicate with the TCP TURN server, and wherein the client service identity identifies at least one of the computing client and a service on the computing client to the TCP TURN server.

The present disclosure further provides a computing device comprising: a processor; and a communications subsystem, wherein the computing device is located behind a network address translator (NAT) and firewall and is configured to: establish a control connection with a transmission control protocol (TCP) Traversal Using Relays Around NAT (TURN) server utilizing a port capable of traversing the restrictive-access firewall; request an allocation of a client service identity from the TCP TURN server; and receive, from the TCP TURN server, a response containing the client service identity, wherein the client service identity is independent of any port used to communicate with the TCP TURN server, and wherein the client service identity identifies at least one of the computing client and a service on the computing client to the TCP TURN server.

The present disclosure further provides a method at a TCP Traversal Using Relays Around Network Address Translator (TURN) server, the method comprising: listening on a first port for communications from a computing client, the computing client being behind a firewall and the first port capable of traversing the firewall; accepting a control connection with the computing client on the first port; receiving a request for an allocation of an client service identity from the computing client; and sending a response containing the client service identity, wherein the client service identity is independent of any port used to communicate with the TCP TURN server, and wherein the client service identity identifies at least one of the computing client and a service on the computing client to the TCP TURN server.

The present disclosure further provides a TCP Traversal Using Relays Around Network Address Translator (TURN) server comprising: a processor; a communications subsystem, wherein the TCP TURN server is configured to: listen on a first port for communications from a computing client, the computing client being behind a firewall and the first port capable of traversing the firewall; accept a control connection with the communications client on the first port; receive a request for an allocation of a client service identity from the computing client; and send a response containing the client service identity, wherein the client service identity is independent of any port used to communicate with the TCP TURN server, and wherein the client service identity identifies at least one of the computing client and a service on the computing client to the TCP TURN server.

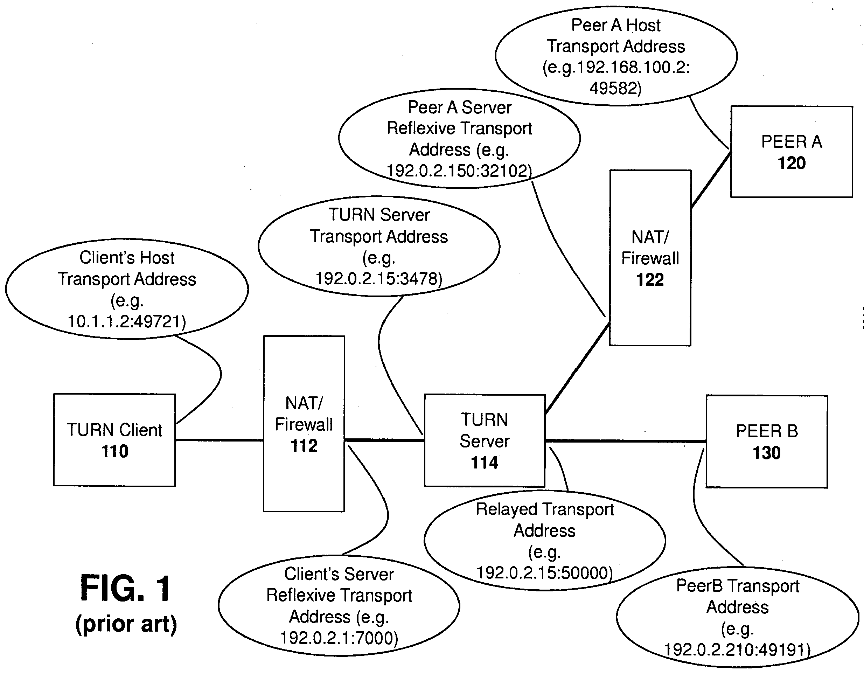

Reference is now made to **Figure 1****,** which follows Section 2 of IETF RFC 5766. As seen in **Figure 1****,** a TURN client **110** is a host behind a NAT/firewall **112.** As indicated in IETF RFC 5766, TURN client **110** is typically connected to a private network defined by IETF RFC 1918 and through one or more NATs **112** to the public internet.

TURN client **110** communicates with a TURN server **114** through the NAT/firewall **112.** As illustrated in **Figure 1****,** the TURN client **110** is on the private side and the TURN server **114** is on the public side. As further indicated in Section 2 of IETF RFC 5766, TURN client **110** talks with TURN server **114** from an IP address and port combination called the client's host transport address. The combination of the IP address and transport layer protocol port (known hereafter as just "port") is called the transport address.

Thus, TURN client **110** sends TURN messages from its host transport address to transport address on the TURN server **114,** known as the TURN server transport address. The TURN server transport address may be configured on the TURN client **110** in some embodiments. In other embodiments the address may be discovered by other techniques.

Further, as indicated in Section 2 of IETF RFC 5766, since the TURN client **110** is behind the NAT, TURN server **114** may see packets from the client **110** as coming from a transport address on the NAT itself. The address may be known as the TURN client's "Server-Reflexive transport address". Packets sent by the TURN server to the TURN Client's server-reflexive transport address may be forwarded by the NAT to the TURN Client's host transport address.

TURN Client **110** uses TURN commands to create and manipulate an allocation on the TURN server **114.** An allocation is a data structure on the TURN server **114** and may contain, among other things, the allocated relayed transport address for the TURN Client **110.** The relayed transport address is the transport address on the TURN server **114** that peers can use to have the TURN server **114** relay data to the TURN client **110.** An allocation is uniquely identified by its relayed transport address. The above is specified in IETF RFC 5766.

Once an allocation is created, TURN client **110** can send application data to TURN server **114,** along with an indication of which peer the data is to be sent to. The TURN server **114** may then relay this data to.the appropriate peer. The communication of the application data to the TURN server **114** may be inside a TURN message and the data may be extracted from the TURN message at the TURN server **114** and sent to the peer in a user datagram protocol (UDP) datagram. Thus, in the example of **Figure 1****,** one of a peer **120** and a peer **130** may be selected by TURN client **110.** In the example of **Figure 1****,** peer **120** is behind a NAT/firewall **122.**

In the reverse direction, a peer, such as peer **130,** can send application data to TURN server **114** in a UDP datagram. The application data would be sent to the relayed transport address allocated to the TURN client **110** and the TURN server **114** can then encapsulate the data inside a TURN message and send it to TURN client **110** with an indication of which peer sent the data.

Since the TURN message contains an indication of which peer the client is communicating with, a TURN client **110** can use a single allocation on TURN server **114** to communicate with multiple peers.

When the peer, such as peer **120,** is behind a NAT/firewall **122,** then the client may identify the peer using the server-reflexive transport address rather than its host transport address. Thus, as seen in **Figure 1****,** NAT/firewall **122** has a server-reflexive transport address of 192.0.2.150:32102 and this would be the address that TURN client **110** utilizes instead of the peer host's actual host transport address of 192.168.100.2:49582.

Each allocation at TURN server **114** is associated with exactly one TURN client **110,** and thus when the packet arrives at the relayed transport address on the TURN server **114,** the TURN server **114** knows which client the data is intended for. However, a TURN client **110** may have multiple allocations between itself and the TURN server **114** at one time.

IETF RFC 5766 defines the use of UDP, TCP and transport layer security (TLS) over TCP between the TURN client **110** and TURN server **114.** However, only UDP is defined to be used between the TURN server 114 and a peer such as peer **120.** IETF RFC 6062, *"Traversal Using Relays around NAT (TURN) Extensions for TCP Allocations"* introduces TCP for communication between TURN server **114** and a peer such as peer **120.**

The ability to utilize TCP connections between a TURN server and a peer allows the TURN client to then use an end to end TCP connection between the TURN client and the peer for services. Such services may include, but are not limited to, web browsing, for example using HTTP, file transfer, for example using file transfer protocol (FTP), instant messaging, for example using message session relay protocol (MSRP) among others.

In addition, RFC 6062 substitutes the TURN messages with TCP connections between TURN client **110** and TURN server **114.** The peer to whom the application data is destined is identified by the relayed transport address, which is the IP address and port on the TURN server **114,** as allocated by the TURN server **114** and sent to the TURN client **110.**

As used herein, a TURN server that has the extensions for TCP in accordance with IETF RFC 6062 is referred to as a "TCP TURN Server".

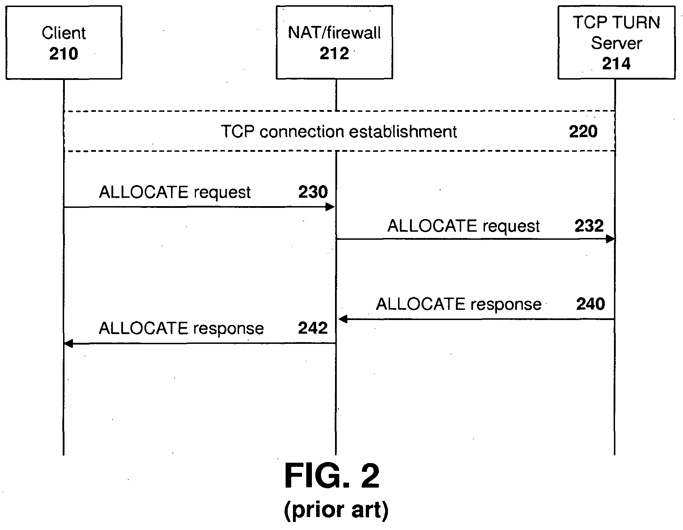

In order to establish an allocation between a client and a TCP TURN Server, various messaging may be provided. Reference is now made to **Figure 2****.**

A TURN client **210** starts by establishing a control connection with TCP TURN server **214,** as shown by block **220** in **Figure 2****.** The control connection is made with the TCP TURN server's transport address, which may include a well-known TURN TCP port, such as port 3478.

Next TURN client **210** sends a TURN ALLOCATE request message, as shown by arrow **230,** to the NAT/firewall **212.** The TURN ALLOCATE request message is then forwarded to TCP TURN Server **214,** as shown by arrow **232.**

TCP TURN Server **214** authenticates TURN client **210** based on the message at arrow **232.** Various authentication protocols may exist and for example may be based on MD5 hashing functions. Other authentication methods would be however known to those in the art.

Assuming authentication succeeds, TCP TURN server **214** then allocates an IP address and a port for TURN client **210,** known as the "relayed transport address", and sends an ALLOCATE response message back to client **210,** indicating a successful allocation and containing the allocated relayed transport address. The ALLOCATE response message is shown by arrow **240** between TCP TURN server **214** and NAT/firewall **212,** and by arrow **242** between NAT/firewall **212** and TURN client **210.**

Once the allocation is completed on the TCP TURN server **214,** two operations are possible. These operations may occur any number of times and in any order for the duration of the allocation.

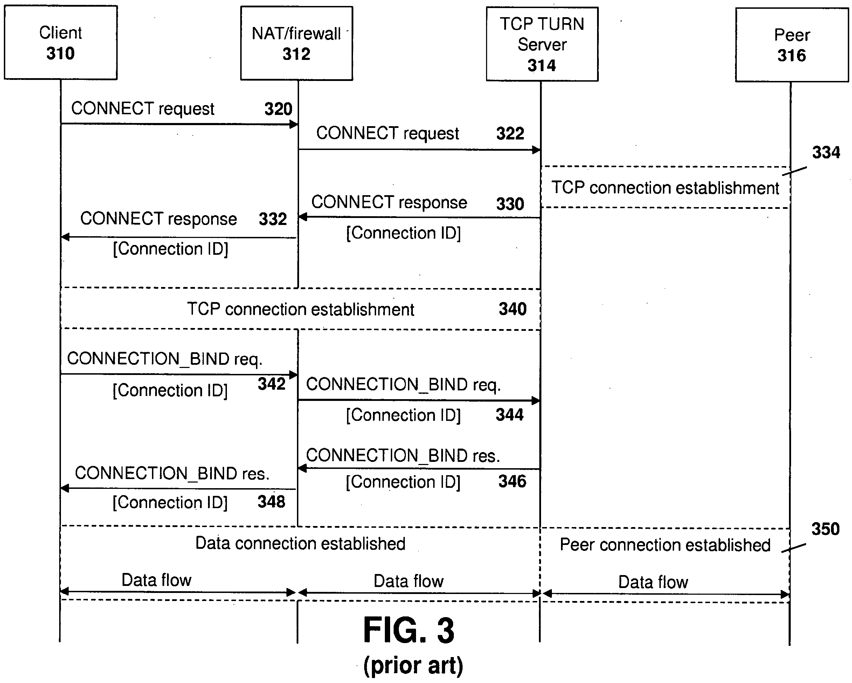

A first operation relates to the establishment of outbound TCP connections from a TURN client to a peer outside of the TURN client's network. Reference is now made to **Figure 3****.**

In order to establish an outbound connection, TURN client **310** utilizes the TCP TURN server **314** by sending a CONNECT request message over the control connection. The connect request message contains the peer's outward facing IP address. Referring to **Figure 1****,** the outward facing IP address could be the host transport address of the Peer such as that of Peer **130** or could be the Server-Reflexive Transport Address, such as that provided by NAT/firewall **122,** depending whether the Peer is behind a NAT.

Thus, as seen in **Figure 3****,** TURN client **310** communicates with a TCP TURN server **314** through a NAT/firewall **312.** TURN client **310** wishes to establish communications with a peer **316.**

The CONNECT request message, as described above is shown in **Figure 3** by arrows **320** and **322** between client **310** and NAT/firewall **312** and between NAT/firewall **312** and TCP TURN server **314** respectively.

Upon receiving the CONNECT request message at arrow **322,** TCP TURN server **314** establishes a TCP connection with peer **316,** as shown by block **334.** The connection is referred to hereinafter as a peer connection.

After successfully establishing a peer connection, TCP TURN server **314** assigns a connection ID (connection identifier) to the peer connection and sends back the connection ID in response to the CONNECT request to the TURN client **310.** The CONNECT response, with a connection ID, is shown with arrows **330** and **332** in the embodiment of **Figure 3****.**

TURN Client **310,** upon receiving the response at arrow **332,** then establishes another outbound TCP connection using a different source address (which may differ only by source TCP port), known as a "data connection" to the same transport address for TCP TURN server **314** as used in the control connection. This is shown with block **340** in the embodiment of **Figure 3****.**

TURN client **310** then sends a CONNECTION_BIND request message, containing the connection ID as received in the previous CONNECT response message, over the data connection to the TCP TURN Server **314.** This shown with arrows **342** and **344** in the embodiment of **Figure 3****.**

The TCP TURN Server **314** then sends a CONNECTION_BIND response message with the connection ID back to TURN Client **310** through NAT/Firewall **312,** as shown by arrows **346** and **348** in the embodiment of **Figure 3****.**

TCP TURN Server **314** then internally binds together the data connection established at block **340** and the peer connection established at block **334.** The binding is shown by block **350** in the embodiment of **Figure 3****.**

After the binding, no further TURN messages are sent on the data connection and just application data packets are provided. Packets received on the data connection from the TURN client **310** are relayed by the TCP TURN server **314** "as is" over the peer connection to the peer **316.** Similarly, packets received on the peer connection from the remote peer are relayed by the TCP TURN server **314** as is over the data connection to the TURN client **310.**

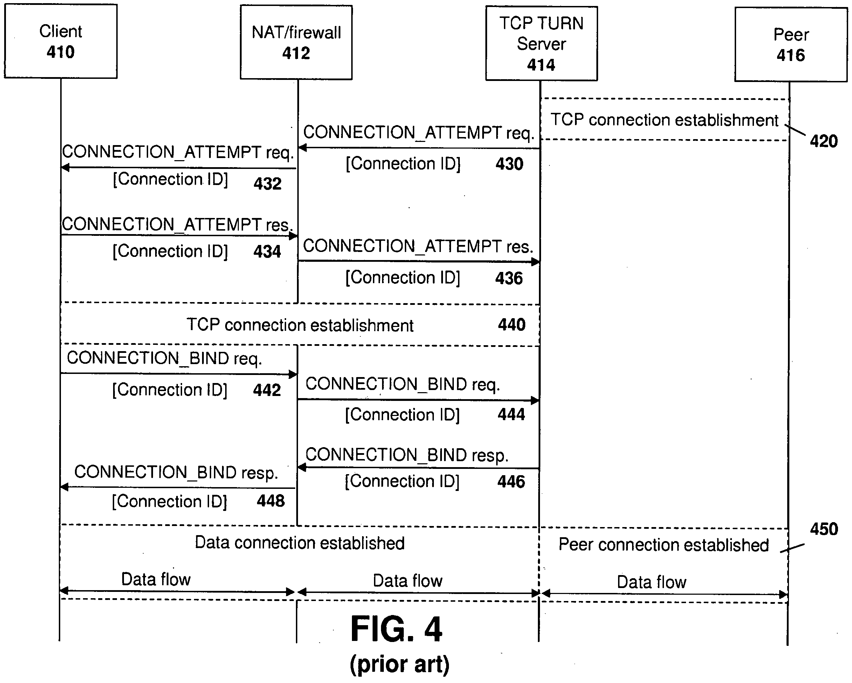

The second operation that may occur based on the ALLOCATION of **Figure 2** relates to the establishment of the TCP inbound connections to the TURN client from a peer outside of the TURN client's network. In other words, the peer wishes to make an outbound TCP connection to the TURN client. Reference is now made to **Figure 4****.**

In the embodiment of **Figure 4****,** a TURN client **410** already established a control connection with a TURN server **414** and a TURN server **414** allocated relayed transport address for the TURN client **410.** Further, in the embodiment of **Figure 4****,** peer **416** wishes to establish a TCP connection with TURN client **410.**

In order to establish the TCP connection, peer **416** establishes a TCP connection to the TURN client **410'**s relayed transport address on TCP TURN server **414.** TCP TURN server **414** first accepts this TCP connection from peer **416,** referred to herein as a "peer connection" and shown by block **420** in **Figure 4****.** TCP TURN server **414** then checks the permissions to see if remote peer **416** is allowed to make a connection to the TURN client **410.** In other words, the check is made to determine whether the peer is allowed to send data to the TURN client's allocated relayed transport address on the TCP TURN server **414.**

If permission is granted, the TCP TURN server assigns a connection ID to the connection and sends the connection ID in a CONNECTION_ATTEMPT request message to TURN client **410.** Such message travels through NAT/firewall **414** and is shown by arrows **430** and 432 in the embodiment of **Figure 4****.**

TURN client **410** then sends back a CONNECTION_ATTEMPT response message to the CONNECTION_ATTEMPT request message, as shown by arrows **434** and **436** in the embodiment of **Figure 4****.**

If the connection attempt is accepted, TURN client **410** establishes an outbound TCP connection using a different source address (which may differ only by source TCP port), known as a "data connection", to the same transport address for TCP TURN server **414** as used in the control connection. This is shown with block **440** in the embodiment of **Figure 4****.**

TURN client **410** then sends a CONNECTION_BIND request message, containing the connection ID as received in the previous CONNECT request message, over the data connection to TCP TURN server **414.** The CONNECTION_BIND request message which contains the connection ID travels through NAT/firewall **412** and is shown by arrows **442** and **444** in the embodiment of **Figure 4****.**

The TCP TURN server **414** then sends a CONENCTION_BIND response message with the connection ID through the NAT/firewall **412** to TURN client **410,** as shown by arrows **446** and **448** in the embodiment of **Figure 4****.**

The TCP TURN server **414** then internally binds together the data connection established at block **440** and the peer connection established at block **420.** The binding is shown by block **450** in the embodiment of **Figure 4****.**

After the binding, no further TURN messages are sent on the data connection and just application data packets are provided. Packets received on the peer connection from the remote peer are relayed by the TCP TURN server **414** as is over the data connection to the client. Similarly, packets received on the data connection from client **410** are then forwarded, as is, over a peer connection to peer **416.**

With the embodiments of **Figures 3** and **4** above, a firewall may restrict TCP connections only to certain ports for security or privacy reasons, among other reasons. For example, only TCP port 80 (e.g. for HTTP) and port 443 (e.g. for HTTPS) may be allowed for outbound TCP connections in order to enable users to access the World Wide Web but nothing else. Ports 80 and 443 are however merely provided as examples and other ports could be enabled in addition or alternatively to these two example ports.

Thus, the embodiments of **Figures 2****,** **3** and **4** may not work if a client such as client **210, 310** or **410** is in a restricted access network environment and if the access to the port that is used in the TCP TURN server's transport address is blocked by the firewall. Port 3478, in some examples, is the port used in the TCP TURN server's transport address i.e. used by the TURN client to access the TCP TURN server. If this port is blocked by the firewall then the TCP connection establishment will fail/not occur.

Also, in the embodiments of **Figures 3** and **4****,** peers that are in a restricted access network environment may not be able to access the TCP TURN Server since the TCP TURN Server will allocate different ports for a TURN client, and access to the TURN client's allocated port on the TCP TURN Server (i.e. in the Relayed Transport Address) may then be blocked by the firewall on the peer's local network.

In both cases above, any IP packets or data sent to the port that is prohibited by a firewall on a local network will fail indefinitely. For example, if the TCP TURN Server allocates an address/port, denoted as "Aₐ/Pₚ" herein after, for a Client A, and a Peer B resides on a restrictive-access network, then Peer B will not be able to establish any TCP connection to "Aₐ/Pₚ" if Pₚ is restricted by the firewall. The scenario where the firewall restricts Aₐ is not addressed herein.

Two alternative embodiments for overcoming the issue of not being able to use a TCP TURN Server through a restrictive-access-network environment are provided. In a first embodiment, a single TCP TURN Server is used. In an alternative embodiment, two TCP TURN Servers are used and the two TCP TURN Servers are linked/connected together. Each is discussed below.

### One TCP TURN Server

In accordance with one embodiment of the present disclosure, a TCP TURN server may listen to only one or a subset of all possible TCP ports, where said ports may be known to the TCP TURN Server to be allowed/uninhibited/unrestricted by Firewalls. If a plurality of ports is utilized then the TCP TURN Server may listen on the first port for control connections and data connections from the clients, and listen on the second port for peer connections from the peers. All control connections, peer connections, and data connections are established on that port / those ports. The first message received on all/any TCP connections at the TCP TURN Server determines the connection type. Also, a client service identity or identifier (known herein after as a "TAG") is allocated to a Client instead of an IP address and port (i.e. Relayed Transport Address). A TAG is used in the same manner as a Relayed Transport Address on a TCP TURN Server i.e. to enable communications/IP packet flow between a Client and one or more Peers. As with a Relayed Transport Address, a TCP TURN Server may allocate a plurality of TAGs to a Client, such as to enable communication/IP traffic/packets to and from a plurality of destination TCP ports on the Client.

In the embodiments described below, the terms "listening on a port" and "monitoring traffic directed to a port number" are considered to be equivalent terms.

### Initialization

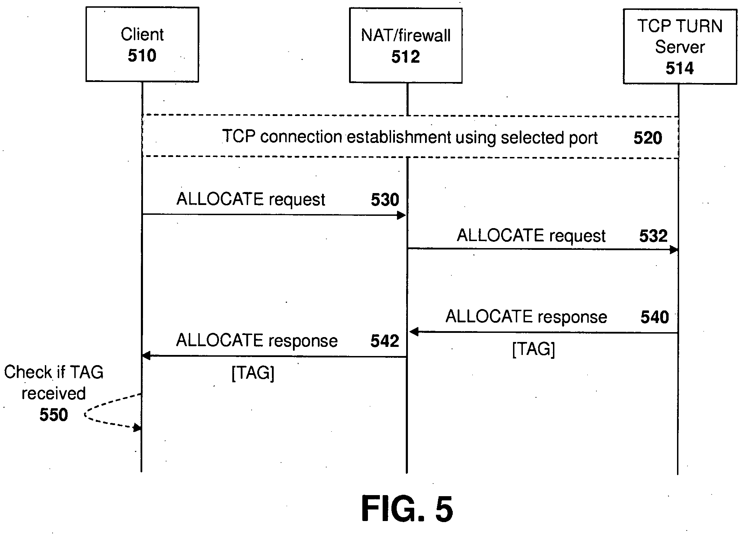

As with the embodiment of **Figure 2** above, the TCP TURN Server needs to initialize with a client. In this regard, reference is made to **Figure 5****.**

In the example embodiment of **Figure 5****,** a client **510** communicates through a NAT/firewall **512** with a TCP TURN server **514.**

Instead of listening on only the usual STUN/TURN ports, TCP TURN server **514** listens on one or a plurality of ports that are known, for example by configuration, to be allowed through the client's local firewall. For example, the TCP TURN server **514** may listen on ports 80, 443, among others. In some embodiments, the usual STUN/TURN port of port 3478 may also be listened on. However, this is optional and in other embodiments the STUN/TURN port does not need to be listened on.

Similar to the embodiments of **Figure 2****,** and as defined in IETF RFC 6062, client **510** establishes a control connection to the TCP TURN server, as shown by block **520** in the embodiment of **Figure 5****.** However, in the embodiment of **Figure 5****,** client **510** uses a port number for the underlying TCP connection that is known to be allowed through the NAT/firewall **512** entity and which is known to be serviced by the destination TCP TURN server **514.**

Client **510** then sends an ALLOCATE request message through NAT/firewall **512** to TCP TURN Server **514,** as shown by arrows **530** and **532.**

Upon receiving the ALLOCATE request message from the client at arrow **532,** TCP TURN server **514** then, instead of allocating a different address and port for the client to be used as the relayed transport address, as per IETF RFC 6062, allocates at least one and possibly more than one identifier, identity, pseudonym, alias or other identifying label, hereinafter known as a TAG. The allocated TAG is then sent to client **510** by TCP TURN server **514** in the "ALLOCATE response" message, as shown by arrows **540** and **542.** Examples of TAG identifiers are provided below.

In one optional embodiment, the client **510** may check a received ALLOCATE response from a TCP TURN server **514** for the presence of a TAG. If the TAG is present in the message then the client determines that it is assigned a TAG by the TCP TURN server instead of a specific port. Otherwise, if the TAG is absent or not present in the message then the client determines that it is assigned one or more ports by the TCP TURN server pursuant to IETF RFC 6062. This may provide for backwards compatibility in which the TCP TURN Server may not be configured to provide a TAG rather than a port. The optional check is shown by dotted line **550** in the embodiment of **Figure 5****.**

In a further optional embodiment, the client **510** may, in the ALLOCATION request message **530,** indicate to the TCP TURN server **514** its preference to use a TAG rather than a port. This may be done through the presence or absence of a value such as a flag, attribute or bit in a bit field or indicator, for example in the ALLOCATE request message. For example, the ALLOCATE request message **530** may include a TAG attribute set to a value such as a 1 or a 0. Upon receiving the ALLOCATE request message with the indication, TCP TURN server **514** may determine whether the Client is allowed to use the feature and, if so, the TCP TURN server **514** may allocate or assign a TAG to Client **510** and include the allocated TAG in the associate ALLOCATE response message. This assumes that the TCP TURN server **514** supports the TAG feature rather than the use of a port to distinguish clients. If the TCP TURN server **514** does not support the TAG feature, the bit or indicator may be just ignored at the TCP TURN server **514.**

The embodiment of **Figure 5** is a simplification of the full procedure as specified in IETF RFC 6062. Additional features and functionalities not mentioned above may also be implemented and occur both on the client and on the TCP TURN server. These include, but are not limited to, failure or error handling, permission setting or checking, authentication, among others.

Once the client is authenticated with the TCP TURN Server, in order to receive incoming connections from peer entities, the client needs to advertise certain connection information to the peer entities. Under the current embodiments of IETF RFC 6062, the connection information includes at least one port on the TCP TURN server that is allocated to the client as well as an identifier of the TCP TURN server. This identifier may be the IP address, host name, or host name and domain name, such as a fully qualified domain name (FQDN), among others.

Conversely, in some embodiments of the present disclosure, the connection information instead includes at least one of the TAGs allocated to the client, the port on the TCP TURN server that the TCP TURN server is willing to accept incoming connections on from peer entities and an identifier of the TCP TURN server. Again the identifier may be the IP address, host name or host name and domain names such as the FQDN, of the TCP TURN server. Various ways to advertise the connection information are described below. The embodiments below are however not limiting, and other techniques could also be applied to ensure a peer entity obtains connection information to establish the communications with the client.

TCP TURN server **514** not only listens to the transport layer port for client communications, it also listens to one or more transport layer ports, such as TCP ports, that are known to be allowed through a firewall of one or more peer entities in order to allow incoming peer communications from peer entities. The transport layer ports may, but do not necessarily need to, differ between different connection types, including control connections, data connections and peer connections. In IETF RFC 6062, the TCP TURN server **514** differentiates between control connections, data connections and peer connections by the transport layer port requested on the TCP TURN server. However, in accordance with the embodiment of **Figure 5****,** one or more of the same ports may be used for two or more of control connections, data connections and peer connections, and thus the transport layer port alone requested by incoming IP connections to the TCP TURN server may not differentiate between these different connection types. In order to support differentiation between different connection types, the TCP TURN server may distinguish in accordance with the following.

If a first message received by the TCP TURN server is a valid ALLOCATE request message, and the allocation succeeds, the connection may be marked as a control connection from a client.

If a first message received by the TCP TURN server is a CONNECTION_BIND request message, and the message integrity check passes, and the connection ID contained in the CONNECTION_BIND request message is valid, then this connection may be marked as a data connection from a client.

If a first message received by the TCP TURN Server is none of the above, then the message may be marked as a peer connection from a peer and the TCP TURN server attempts to identify a valid TAG from the data or messaging received. In this case, if a valid TAG is identified or extracted then the TCP TURN server may use the TAG instead of the port number in order to identify the associated client and initiate normal procedures according to IETF RFC 6062 for triggering the client to establish a data connection to the TCP TURN server and associating the data connection with the peer connection.

Conversely, if a valid TAG is not identified or extracted, then normal procedures according to IETF RFC 6062 are applied for the case where the associated client is not found. In this case, the TCP TURN server terminates the TCP connection.

### CLIENT INITIATED COMMUNICATIONS

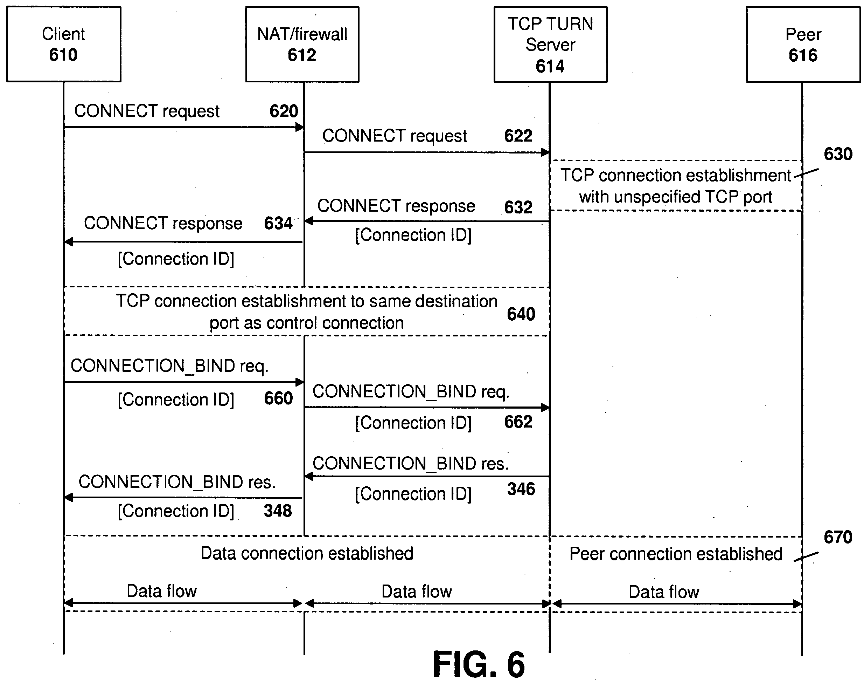

Reference is now made to **Figure 6****.** In the embodiment of **Figure 6****,** a client **610** communicates through a NAT/firewall **612** to a TCP TURN server **614,** in order to initiate communication with a peer **616.**

Whenever a client **610** wishes to initiate communication with a peer **616,** the client sends a CONNECT request to the TCP TURN Server **614** through the NAT/firewall **612** over a control connection, as established above with regard to **Figure 5****.** In such case, the connect request includes XOR-PEER-ADDRESS attribute/field/information element or parameter containing the transport address of the peer to which the connection is desired. The CONNECT request message is shown by arrows **620** and **622.**

Upon receiving the CONNECT request message at arrow **622,** TCP TURN Server **614** then establishes a TCP connection to peer **616,** using an unspecific source TCP port since there is no specific port allocated to client **610.** The source TCP port used may be assigned at random or sequentially by the TCP TURN Server or by other means. How the source TCP port is assigned is superfluous to the embodiment, however, the source TCP port used needs to be not currently assigned for use with another peer or the same peer. TCP TURN server **614** then assigns a connection ID to this peer connection.

The TCP TURN server then sends a CONNECT response message back to the client which includes the connection ID, as shown by arrows **632** and **634.**

Client **610** then establishes a new TCP connection to the TCP TURN Server, referred to as a "data connection", using the same destination port number to which the control connection was established, but using a different source/local port number to which the control connection was established. This is shown with block **640.**

If the data connection is successfully established then the client **610** sends a CONNECTION_BIND request message containing the connection ID received in the CONNECT response message of arrow **634** over the data connection to the TCP TURN server **614,** as depicted by arrows **660** and **662** in the embodiment of **Figure 6****.**

Upon receiving the CONNECTION_BIND request message from client **610,** TCP TURN server **614** binds or associates the peer connection shown at block **630** with the data connection shown at block **640,** as shown by block **670.** TCP TURN sever **614** further sends a CONNECTION_BIND response with the connection ID back to client **610,** as shown by arrow **672** and **674.**

Thus, when the binding at block **670** is established successfully, any data, IP packets, and/or datagrams received over the data connection from the client are relayed/forwarded/proxied "as is" to the TCP TURN server over the peer connection to the peer entity. Further, all packets received over the Peer connection from the Peer entity are then relayed, forwarded or proxied by the TCP TURN server over the data connection to the client as is.

Other features or functionalities not mentioned may also be implemented. These include, but are not limited to, communication termination initiated by either the client or the peer, failure or error handling, permission setting or checking, authentication, among others.

### PEER INITIATED COMMUNICATIONS

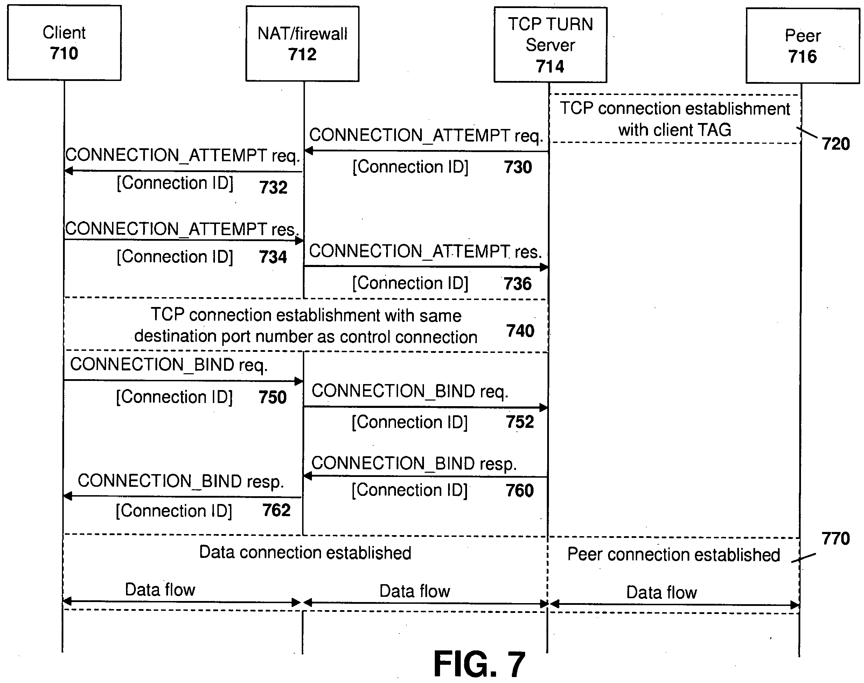

Instead of a client initiated communication as described above with reference to **Figure 6****,** a peer may wish to initiate communications with a client. Reference is now made to **Figure 7****.**

In the embodiment of **Figure 7****,** a client **710** communicates through a NAT/firewall **712** with a TCP TURN server **714,** in order to enable a peer **716** to communicate with client **710.**

When a peer wishes to initiate communication with a client **710,** the peer **716** initiates a TCP connection to an IP address and port on a TCP TURN server **714.** The connection is shown by block **720** in the embodiment of **Figure 7****.** The address and port of the TCP TURN Server are advertised by client **710** to peer **716** using an out-of-band mechanism in one embodiment. The examples of out-of-band mechanisms presented below are meant to be non-limiting and other mechanisms would be within the scope of the present disclosure. Once the TCP connection is established, it becomes the peer connection.

The peer then conveys to the TCP TURN Server 714 over the peer connection a TAG that is allocated to client 710. The TAG may be conveyed either immediately after the TCP connection has been successfully established (i.e. all TCP related signaling pertaining to the TCP connection has completed/finished) such as before the sending of any protocol message, or as part of a first application layer (layer 7) protocol messaging. If the first application layer protocol messaging is used, then the TCP TURN Server may need to be application protocol aware to recognize and extract the TAG from the application protocol.

Upon receiving and/or extracting a TAG from peer **716,** the TCP TURN server **714** then uses the value of the TAG to identify and find the intended destination client **710** and find the corresponding control connection (as previously established in accordance with the embodiment of **Figure 5****).**

If the TCP TURN server **714** identifies a control connection, the TCP TURN server **714** then assigns a connection ID to the incoming connection from the peer entity, referred to hereinafter as a "peer connection". Thus, upon receiving and/or extracting the TAG from the Peer, the TCP TURN Server sends a CONNECTION_ATTEMPT request message containing a connection ID over an associated control connection to client 710, as shown by arrows **730** and **732.**

Upon receiving the CONNECTION_ATTEMPT request message from the TCP TURN server **714,** client **710** sends a CONNECTION_ATTEMPT response message back to the TCP TURN server **714,** as shown by arrows **734** and **736.**

The client then establishes a new TCP connection with TCP TURN server **714,** the connection being referred to as a "data connection" and shown by block **740** in the embodiment of **Figure 7****.** The connection is established using the same destination port number to which the control connection was established but using a different source/local port number to which the control connection was established.

If the data connection is successfully established then client **710** sends a CONNECTION_BIND request message containing the connection ID received in the CONNECTION_ATTEMPT request message at arrow **732** over the data connection of block **740.** The CONNECTION_BIND request is shown with arrows **750** and **752** in the embodiment of **Figure 7****.**

Upon receiving the CONNECTION_BIND request at arrow **752,** TCP TURN server **714** then sends a CONNECTION_BIND response with the connection ID, as shown by arrows **760** and **762** in the embodiment of **Figure 7****.**

The TCP TURN Server **714** then binds the peer connection of block **720** with the data connection of block **740,** as shown by bock **770** in the embodiments of **Figure 7****.**

Upon successful completion of the binding, any data, IP packets, and/or datagrams received over the data connection from the client **710** may be relayed, forwarded or proxied by the TCP TURN server **714** as is over the peer connection to the peer entity **716.** Also, any packets received over the peer connection from peer **716** may be relayed, forwarded or proxied as is by the TCP TURN server **714** over the data connection to the client **710.**

Additional features or functionalities may also be implemented. These include, but are not necessarily limited to, communication termination initiated by either the client or the peer, failure or error handling, permissions setting or checking, authentication, among others.

### TAG DEFINITION

A new STUN/TURN message attribute or information element may be defined for a TAG, an example of such is the following:
*Ox002b: TAG*

In accordance with the above embodiments, any unused STUN/TURN attribute value could be used.

The value assigned to the TAG may uniquely identify each client on the TCP TURN server or uniquely identify each Client connection. If clients connected to the TCP TURN Server only wish to use one service (that is, only one TCP port on the client will be utilized), then the TAG may be the client identifier.

Otherwise, if multiple services per client are allowed (that is, a plurality of TCP ports on the client will be utilized), then the TAG is something other than the client identifier. In this case, the TAG may be a string with a fixed length of, for example, 4 bytes/octets in order efficiently use bandwidth and storage space and also to aid the TCP TURN server internal look-ups. The TAG may also be of the same format as the TCP port number i.e. a numeric-only value. The TAG may use a character encoding e.g. UTF-8, ASCII, UTF-16 amongst others.

In accordance with some of the embodiments above, the data connection, peer connection and control connection all share one port on the TCP TURN server, and methods may be used in order to differentiate between a received TAG value and a STUN.TURN message. For example, in accordance with IETF RFC 5766 and IETF RFC 5389 the first two bits of any STUN/TURN message are always "00". Thus, in order to differentiate between a received TAG value and a STUN/TURN message, the first digit or character of the value of the TAG may have a value whose first two bits are not "00".

In one example embodiment, the TAG may have a first value that is representative of letters A through to Z, assuming ASCII compatible encoding. These letters would be 01000001-01011010 in binary.

The remaining 3 characters could be any character and may, for example, be any letter from A-Z or any number from 0-9. Thus, the total number of available TAG values utilizing the above example is 26 * 36 * 36 * 36 = 1213056 different values or permutations.

When allocating a TAG value to a client, the TCP TURN server may ensure that the TAG is random and unique for all of its client connections. This ensures that the TAG is unpredictable to other TCP nodes/hosts and prevents security breaches such as denial of service attacks or TCP connection hijacking.

### CONVEYING THE TAG

As provided above with regard to block **720** of **Figure 7****,** before being able to accept any messages, the TCP TURN server **714** needs to negotiate and accept an incoming TCP connection. Once the incoming TCP connection is established, a TAG may be conveyed from a peer **716** to the TCP TURN server **714.** Conveying of the TAG may be done in various ways not necessarily limited to the below embodiments.

In one embodiment, a simple TAG conveying/transfer procedure (such as a layer 4 (transport) protocol) may be utilized. Such a procedure occurs once the TCP connection is successfully established between the peer and the TCP TURN server, and a first message sent on the TCP connection (known as the "peer connection") may be a valid TAG. A valid TAG may be sent on its own. In other words just the value of the TAG may be sent over the peer connection. Alternatively, the TAG may be provided with an identifier that precedes it or follows it, such as the TAG attribute value for example 0x002b may be used to provide the TAG attribute value. A new identifier which is a composition of numeric, alphabetic or alphanumeric values or strings of characters may be utilized. Alternatively or in addition to a TAG attribute value, in some embodiments, a new or existing STUN/TURN message may be used to convey the TAG from the Peer to the TCP TURN Server, possibly amongst other information or data.

Alternatively, or in addition to the simple TAG transfer procedure discussed above, a layer 5 (session) protocol or above may be used.

In particular, for some applications or services it may be beneficial not to impact the peer. For example, it may be beneficial not to impact a web browser application in the peer. One way to overcome the obstacle is to embed the client's TAG in an address, identifier, uniform resource identifier (URI), or uniform resource locator (URL) in such a way as to be compatible with the application running on the peer.

For example, the conveying of the client's TAG may be done in such a way as to have an application running on the peer not perform any specific processing of the client's TAG. This then ensures that the first layer 5 (or above) message from the peer to the TCP TURN server includes the TAG. As will be appreciated, in this case the TCP TURN server needs to understand layer 5 or above protocols in order to extract the TAG from the first message.

In one embodiment using HTTP, the TAG can be embedded in the HTTP URL/URI, which ensures that it is carried in the HTTP request line in messages such as, but not limited to, the HTTP GET, HTTP POST, HTTP PUT, among others. The TAG could appear as part of the path/directory structure on the client's HTTP server software, or could be included as a part of a URI/URL query string, such as a "search part" from IETF RFC 1738 or the "query component" in IETF RFC 3986. In this case, a particular field may be denoted for the TAG and the value of the TAG may be included as the value for the field. For example, if the TCP TURN server allocates a TAG "KKDQ" for a Client that has been allocated an IPv4 address of 10.1.22.22 and is running HTTP server software, then the HTTP URL may be set to "http://10.1.22.22/KKDQ/image1.jpg" or "http://10.1.22.22/image1.jpg?TAG=KKDQ". The above embodiment could also use the string "FILE:" at the beginning instead of the string "HTTP:".

In a further embodiment, the host request-header field in the HTTP Request message may be leveraged. IETF RFC 2616 defines the host request-header field in section 14.23. To use the host request-header field, the TAG may be in the form of a valid FQDN, which is then resolved to an IP address e.g. by DNS resolution. For example, the TCP TURN Server may assign "shareservice.example.com" as a TAG for a client and the peer uses the URL/URI "http://shareservice.example.com" to reach the client. Thus, the peer initiates a peer connection to the TCP TURN server of the client and includes the TAG in a host request-header field in an HTTP method such as GET, PUT, POST, among others.

The TCP TURN server, upon receiving the HTTP method over the peer connection, extracts the value of the host request-header field from the HTTP method and uses this extracted value as the TAG. The remaining operations or procedures described above with reference to **Figures 5****,** **6** and **7** may be utilized.

In a further embodiment for SIP, the TAG can be embedded in a SIP/SIPS URI/URL or a Tel URI/URL, ensuring that it is carried in such SIP methods as REGISTER, INVITE, INFO, MESSAGE, OPTIONS, among others. This may be done utilizing a "SIP parameter" rather than a "query string", but following the embodiments above for inserting the HTTP query string. One example for a SIP URI would be "SIP:foo.bar@10.1.22.22;TAG=KKDQ. An example of a Tel URI would be TEL:+1-912-555-1234;TAG=KKDQ.

In a further embodiment for FTP, the TAG can be embedded in an FTP URL/URI following the embodiments described above for inserting the HTTP path/directory. In this case, the insertion would be considered an FTP URL path in accordance with IETF RFC 1738. One example of an insertion for FTP would be "FTP://10.1.22.22/KKDQ/image1.jpg".

In a further embodiment for TELNET, the TAG can be entered by the user and conveyed from the Peer to the TCP TURN Server right after the TCP connection is established.

The above is not exhaustive and other examples of embedding the TAG are possible. For the above cases, the TCP TURN server buffers the message that has the TAG embedded and sends the buffered message to the Client upon binding the data connection and peer connection.

### OUT-OF-BAND SOLUTIONS TO ADVERTISE CONNECTION INFORMATION

In order to connect to a client through the TCP TURN server, a Peer needs to know certain connection information including the IP address and TCP port of the TCP TURN server. Further, in accordance with the embodiments described above, the Peer also needs to know the TAG associated with the client to whom the peer wishes to communicate.

In the TCP TURN Server solution defined in IETF RFC 6062, an IP address and port, known as the Relayed Server Address, is used to identify the client to whom the peer entity wishes to communicate. However, in the solutions provided above, the TAG alone is used to identify the client, whereas the IP address and port used, although required for a connection to the TCP TURN Server, do not identify the client. Thus, as used herein, "connection info" and "connection information" are used to refer to information such as the IP address and port associated with a TCP TURN Server, and in some embodiments includes the TAG associated with a client.

In order for the peer to get the connection information, in one embodiment the STUN/TURN messaging may be extended to enable a peer to query an entity or node, such as the TCP TURN server, a proxy node for a group of TCP TURN servers, among others.

For example, a new STUN method may be defined as: "QUERY_CONNECTION_INFO" and may, for example, have an ID of 0x00a. Alternatively, an existing method may be extended, for example, the BIND method. Alternatively another protocol and message may be used such as RADIUS, DIAMETER, SIP, among others. Utilizing these messages, the peer may query the TCP TURN SERVER for the connection information.

In an alternative solution, a simple text-based message approach may be used to enable a peer to query an entity such as a TCP TURN server, a proxy node for a group of TCP TURN servers, among others, for the connection information of a particular client. A non-limiting example of such text query may be as follows:
- Peer to TCP TURN Server: GET_CONNECTION_INFO [Client ID]\r\n (where "[Client ID]" is the username that the client is using in the TCP TURN server); or
- TCP TURN server to peer: [IP address, port, TAG]\r\n (where "[TAG]" is a TAG assigned to the requested client)

Thus, any message in any protocol may be used and a peer can query an entity or node for the connection info of the client to whom it wishes to communicate. In addition, the mechanism for the peer to discover the entity to query for the connection information may use established methods. In one embodiment the destination IP address and destination port used by the peer to query the TAG may be a destination IP address and port allowed by the policy of the firewall on the peer's local network.

In another alternative solution, the connection information may be included in an email, Short Message Service (SMS) message, an instant message, among others, sent to the peer by either the client, the TCP TURN server or another entity on behalf of the client or the TCP TURN server.

Optionally the Client's identifier information, IP address, hostname, hostname with domain name including an FQDN, among other information may be included as well in order for the receiving node to be able to associate which client has the connection info. Alternatively the source address, identifier or identity of the email, SMS message, instant message, among others, could be used by the receiving party to associate which client has the connection info.

### Two TCP TURN Servers solution

In an alternative to the above, two TCP TURN Servers may be enabled. Each TCP TURN Server may listen on an enabled port and allocate different addresses or ports for different clients.

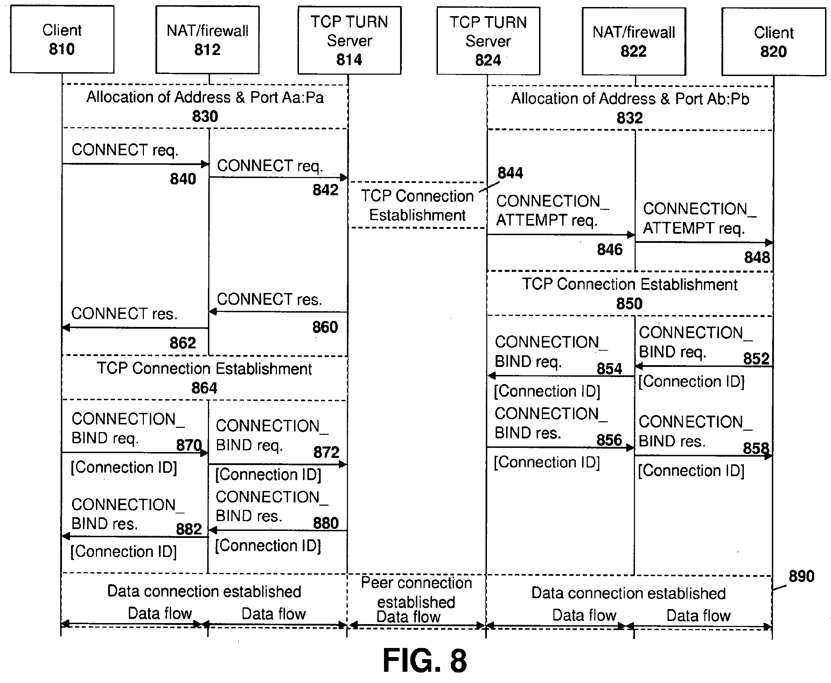

Reference is now made to **Figure 8****,** which shows a client **810** wishing to establish communication with a client **820.** In the embodiment of **Figure 8****,** client **810** communicates with a TCP TURN Server **814** through a NAT/firewall **812.** Similarly, client **820** communicates with a TCP TURN Server **824** through a NAT/firewall **822.**

In the embodiment of **Figure 8****,** client **810** is initialized with TCP TURN server **814** in accordance with **Figure 2** above utilizing a port that is capable of travelling through NAT/firewall **812.** Similarly, client **820** is initialized with TCP TURN server **824** using a port that is capable of travelling through the NAT/firewall **822.**

In order for client **810** to establish communications, TCP TURN server **814** allocates an address and a port for client **810,** as shown by block **830.** Similarly, TCP TURN Server **824** allocates an address and a port for client **820,** as shown by block **832.**

Client **810** then sends a CONNECT request message to the TCP TURN Server **814** over the control connection, as shown by arrows **840** and **842.**

Upon receiving the CONNECT request message at TCP TURN server **814,** the TCP TURN server establishes a TCP connection from address/port Aa:Pa to address/port Ab:Pb on TCP TURN server **824.** This is shown with block **844** in the embodiment of **Figure 8****.**

Once TCP TURN server **824** accepts the TCP connection, the connection becomes a "Peer Connection" and TCP TURN Server **824** assigns a connection identifier to the connection. TCP TURN server **824** then sends a CONNECTION_ATTEMPT request, including the connection identifier through NAT/firewall **822** to Client **820,** as shown by arrows **846** and **848** in the embodiment of **Figure 8****.**

Upon receiving the CONNECTION_ATTEMPT request message of arrow **848,** client **820** establishes a new TCP connection to TCP TURN server **824,** and the new connection is referred to as a data connection and shown with block **850** in the embodiment of **Figure 8****.**

If the data connection at block **850** is successfully established, client **820** sends a CONNECTION_BIND request message to TCP TURN server **824,** as shown by arrows **852** and **854** in the embodiment of **Figure 8****,** where the CONNECTION_BIND request contains the connection identifier from the message of arrow **848.**

Upon receiving the CONNECTION_BIND request message from client **820,** TCP TURN server **824** binds the peer connection and the data connection from the client together and a CONNECTION_BIND response is provided as shown by arrows **856** and **858.**

Similarly, TCP TURN server **814,** upon receiving an indication from TCP TURN Server **824** that the peer connection is established, assigns a connection identifier to the peer connection and sends the CONNECT response message with the connection identifier to client **810** over the control connection. This is shown with arrows **860** and **862** in the embodiment of **Figure 8****.**

Client **810** then establishes a data connection, as shown by block **864,** with TCP TURN Server **814.**

If the data connection at block **864** is successfully established, client **810** sends a CONNECTION_BIND request to TCP TURN Server **814** over the data connection at arrow **864,** where the CONNECTION_BIND request includes the connection identifier provided at arrow **862.** The CONNECTION_BIND messages are shown by arrows **870** and **872** in the embodiment of **Figure 8****.**

Upon receiving the CONNECTION_BIND request from the client **810,** TCP TURN Server **814** binds the peer connection of block **844** and the data connection of block **864** and sends a CONNECTION_BIND response message, as shown by arrows **880** and **882.**

Based on the above, the peer connection is bound to the data connection between both client **810** and TCP TURN Server **814,** as well as to the data connection between client **820** and TCP TURN Server **824.** The binding is shown by block **890** in the embodiment of **Figure 8****.**

Once the binding to both the data connections and the peer connection is complete, all IP packets received over the data connection from client **810** by TCP TURN Server **814** are transmitted over the peer connection to TCP TURN Server **824,** which, upon receiving the IP packets, then relays, forwards or proxies the packets as is over the data connection between TCP TURN Server **824** and Client **820.** Similarly, packets from client **820** are transferred over the data connection to TCP TURN server **824** which then relays the packets as they are over the peer connection to TCP TURN server **814.** TCP TURN server **814** then relays the packets as is to client **810** over the data connection.

If the TCP TURN server **814** detects the close of the data connection from client **810,** TCP TURN Server **814** disconnects or terminates the peer connection between TCP TURN Server **814** and TCP TURN server **824.** Similarly, upon detecting the disconnection or termination of the peer connection, TCP TURN Server **824** then disconnects or terminates the data connection with client **820.**

If the TCP TURN Server **824** detects the close of the data connection between itself and client **820,** the TCP TURN Server **824** disconnects or terminates the peer connection between itself and TCP TURN server **814.** Upon detecting the disconnection of the peer connection, the TCP TURN server **814** then disconnects or terminates the data connection to client **810.**

In the embodiment of **Figure 8****,** the messages shown by arrows **846, 848, 850, 852, 854, 856** and **858** may run in parallel to the messages shown by arrows **860, 862, 864, 870, 872, 880** and **882.**

Thus, in accordance with the above, the use of two TCP TURN servers allows for communication between clients through a restricted network such as an enterprise network.

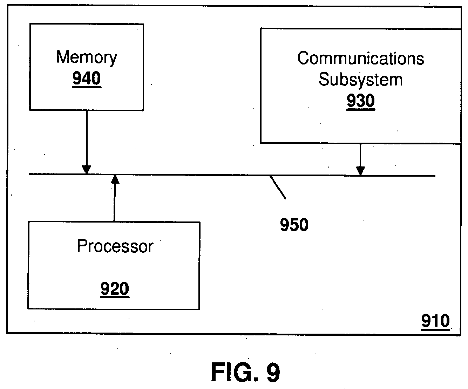

The clients, peers, TURN servers, and NATs, in the embodiments of **Figures 1** to **8** above can be any network element, or part of any network element, including various network servers. Reference is now made to **Figure 9****,** which shows a generalized computing device, which may comprise a computing client, TURN server, peer computing device, NAT, among others.

In **Figure 9****,** computing device **910** includes a processor **920** and a communications subsystem **930,** where the processor **920** and communications subsystem **930** cooperate to perform the methods of the embodiments described above.

In particular, computing device **910** may be any computer or server, and can include, for example, a network based server, a personal computer, a combination of servers, a mobile device, a tablet computer, a laptop computer, among others.

Processor **920** is configured to execute programmable logic, which may be stored, along with data, on computing device **910,** and shown in the example of **Figure 9** as memory **940.** Memory **940** can be any tangible storage medium.

Alternatively, or in addition to memory **940,** computing device **910** may access data or programmable logic from an external storage medium, for example through communications subsystem **930.**

Communications subsystem **930** allows computing device **910** to communicate with other network elements, such as a client computer through a NAT, a peer, or a TCP TURN Server, depending on the function of computing device **910.** Examples of protocols for communication subsystem **930** include Ethernet, WiFi, cellular, WiLAN, among others.

Communications between the various elements of computing device **910** may be through an internal bus **950** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a computing client (510) located behind a network address translator, NAT, and firewall (512), the method comprising:
establishing a control connection (520) with a transmission control protocol , TCP, Traversal Using Relays Around NAT, TURN, server (514) utilizing a port capable of traversing the firewall (512);
requesting (530) an allocation of a client service identity from the TCP TURN server (514); and
receiving, from the TCP TURN server (514), a response (542) containing the client service identity,
wherein the client service identity is independent of any port used to communicate with the TCP TURN server (514), and wherein the client service identity identifies at least one of the computing client (510) and a service on the computing client (510) to the TCP TURN server (514).

2. The method of claim 1, wherein the requesting (530) includes an indication to the TCP TURN server (514) that the computing client (510) prefers to be allocated the client service identity rather than a port number.

3. The method of claim 1, wherein the receiving includes determining whether the response (542) includes the client service identity.

4. The method of claim 1, further comprising advertising the client service identity to at least one peer computing device (120, 130).

5. A computing device (910) comprising:
a processor (920); and
a communications subsystem (930),
wherein the computing device (910) is located behind a network address translator , NAT, and firewall (112) and is adapted to perform the method of any one of claims 1 to 4.

6. A method at a TCP Traversal Using Relays Around Network Address Translator, TURN, server (514), the method comprising:
listening on a first port for communications from a computing client (510), the computing client (510) being behind a firewall (512) and the first port capable of traversing the firewall (512);
accepting a control connection (520) with the computing client (510) on the first port;
receiving a request (532) for an allocation of a client service identity from the computing client (510); and
sending a response (540) containing the client service identity,
wherein the client service identity is independent of any port used to communicate with the TCP TURN server (514), and wherein the client service identity identifies at least one of the computing client (510) and a service on the computing client (510) to the TCP TURN server (514).

7. The method of claim 6, wherein the control connection (520) between the computing client (510) and the TURN server (514) use the same port on the TURN server (514) as data connections and peer connections.

8. The method of claim 7, wherein a first message after connection establishment at the TCP TURN server (514) determines a connection type.

9. The method of claim. 8, wherein if the first message is an allocate request (532), the connection type is a control connection.

10. The method of claim 8, wherein if the first message is a connection bind request (662, 752) then the connection type is a data connection.

11. The method of claim 8, wherein the connection type is a peer connection if the first message is not one of:
an allocate request (532) and
a connection bind request (662, 752).

12. The method of claim 11, wherein, if the first message identifies a peer connection, the first message contains the client service identity.

13. The method of claim 12, wherein the first message is the client service identity.

14. The method of claim 13, wherein the client service identity is associated with an attribute value.

15. The method of claim 14, wherein the first message contains the client service identity in a session protocol layer or above, the method further comprising extracting the client service identity at the session protocol layer or above.

16. The method of claim 15, wherein the client service identity is embedded in one of:
a uniform resource identifier; and
a uniform resource locator.

17. The method of claim 15, wherein the client service identity is embedded in a host request-header of an HTTP message.

18. The method of claim 17, wherein the client service identity is a fully qualified domain name, FQDN, and the DNS resolution of the client service identity returns the IP address of the TCP TURN server (514).

19. The method of claim 15, wherein the TCP TURN server (514) buffers the message that has the client service identity embedded and sends the buffered message to the computing client (510) upon binding the data connection (640, 740) and peer connection.

20. The method of claim 6, wherein the request received at the TURN server (514) includes an indication that the computing client (510) prefers to be allocated the client service identity rather than a port number.

21. The method of claim 6, further comprising advertising the client service identity to at least one peer computing device (120).

22. The method of claim 21, wherein the advertising comprises receiving a query from the at least one peer computing device (120) and providing the client service identity to the at least one peer computing device (120).

23. The method of claim 6, further comprising accepting a peer connection (720) with a peer computing device (716), receiving a first message with the client service identity from the peer computing device (716), and sending a connection attempt request (730) to the computing client (710) identified by the client service identity.

24. The method of claim 23, wherein the peer connection (720) is accepted on the first port.

25. The method of claim 23, wherein the peer connection (720) is accepted on a second port, wherein the second port is capable of traversing a firewall (122) between the TURN server (714) and the peer computing device (716).

26. The method of claim 6, further comprising receiving a connect request (622) at the TCP TURN server (614) from a computing client (610), the connect request (622) containing an address for a peer computing device (616) and the TCP TURN server (614) uses an unspecified source port to establish a TCP connection (630) to the peer (616).

27. The method of claim 23, the network upon which the peer (120) resides is a restrictive access IP network.

28. The method of claim 6, the TCP TURN server (114) can serve a plurality of Clients (110) and a plurality of Peers (120, 130) with one of:
one port and
two ports.

29. A TCP Traversal Using Relays Around Network Address Translator, TURN, server (910) comprising:
a processor (920);
a communications subsystem (930),
wherein the TCP TURN server (910) is adapted to perform the method of any one of claims 7 to 30.

## Patentansprüche

1. Verfahren an einem Computer-Client (510), der sich hinter einem Netzwerkadressenübersetzer (NAT - network address translator) und einer Firewall (512) befindet, wobei das Verfahren aufweist:
Herstellen einer Steuerverbindung (520) mit einem Übertragungssteuerungsprotokoll(TCP - transmission control protocol)-TURN(Traversal Using Relays Around NAT)-Server (514) unter Verwendung eines Anschlusses, der fähig ist zum Durchqueren der Firewall (512);
Anfordern (530) einer Zuteilung einer Client-Dienst-Identität von dem TCP-TURN-Server (514); und
Empfangen, von dem TCP-TURN-Server (514), einer Antwort (542) mit der Client-Dienst-Identität,
wobei die Client-Dienst-Identität unabhängig von jedem Anschluss ist, der zum Kommunizieren mit dem TCP-TURN-Server (514) verwendet wird, und
wobei die Client-Dienst-Identität zumindest einen des Computer-Clients (510) und eines Diensts auf dem Computer-Client (510) zu dem TCP-TURN-Server (514) identifiziert.

2. Das Verfahren gemäß Anspruch 1, wobei das Anfordern (530) eine Angabe an den TCP-TURN-Server (514) umfasst, dass der Computer-Client (510) bevorzugt, dass ihm die Client-Dienst-Identität zugewiesen wird anstelle einer Anschlussnummer.

3. Das Verfahren gemäß Anspruch 1, wobei das Empfangen ein Bestimmen umfasst, ob die Antwort (542) die Client-Dienst-Identität umfasst.

4. Das Verfahren gemäß Anspruch 1, das weiter ein Bekanntmachen der Client-Dienst-Identität für zumindest eine Peer-Computervorrichtung (120, 130) aufweist.

5. Computervorrichtung (910), die aufweist:
einen Prozessor (920); und
ein Kommunikationsteilsystem (930),
wobei sich die Computervorrichtung (910) hinter einem Netzwerkadressenübersetzer (NAT - network address translator) und einer Firewall (512) befindet und ausgebildet ist zum Durchführen des Verfahrens gemäß einem der Ansprüche 1 bis 4.

6. Ein Verfahren an einem TCP-TURN(Traversal Using Relays Around Network Address Translator)-Server (514), wobei das Verfahren aufweist:
Überwachen an einem ersten Anschluss hinsichtlich Kommunikationen von einem Computer-Client (510), wobei der Computer-Client (510) hinter einer Firewall (512) ist und der erste Anschluss fähig ist zum Durchqueren der Firewall (512);
Annehmen einer Steuerverbindung (520) mit dem Computer-Client (510) an dem ersten Anschluss;
Empfangen einer Anforderung (532) für eine Zuteilung einer Client-Dienst-Identität von dem Computer-Client (510); und
Senden einer Antwort (540) mit der Client-Dienst-Identität,
wobei die Client-Dienst-Identität unabhängig von jedem Anschluss ist, der zum Kommunizieren mit dem TCP-TURN-Server (514) verwendet wird, und
wobei die Client-Dienst-Identität zumindest einen des Computer-Clients (510) und eines Diensts auf dem Computer-Client (510) zu dem TCP-TURN-Server (514) identifiziert.

7. Das Verfahren gemäß Anspruch 6, wobei die Steuerverbindung (520) zwischen dem Computer-Client (510) und dem TURN-Server (514) denselben Anschluss an dem TURN-Server (514) wie Datenverbindungen und Peer-Verbindungen verwendet.

8. Das Verfahren gemäß Anspruch 7, wobei eine erste Nachricht nach dem Herstellen einer Verbindung an dem TCP-TURN-Server (514) einen Verbindungstyp bestimmt.

9. Das Verfahren gemäß Anspruch 8, wobei, wenn die erste Nachricht eine Zuteilungsanforderung (532) ist, der Verbindungstyp eine Steuerverbindung ist.

10. Das Verfahren gemäß Anspruch 8, wobei, wenn die erste Nachricht eine Verbindung-Binden-Anforderung (662, 752) ist, der Verbindungstyp eine Datenverbindung ist.

11. Das Verfahren gemäß Anspruch 8, wobei der Verbindungstyp eine Peer-Verbindung ist, wenn die erste Nachricht nicht eine ist aus:
eine Zuteilungsanforderung (532), und
eine Verbindung-Binden-Anforderung (662, 752).

12. Das Verfahren gemäß Anspruch 11, wobei, wenn die erste Nachricht eine Peer-Verbindung identifiziert, die erste Nachricht die Client-Dienst-Identität enthält.

13. Das Verfahren gemäß Anspruch 12, wobei die erste Nachricht die Client-Dienst-Identität ist.

14. Das Verfahren gemäß Anspruch 13, wobei die Client-Dienst-Identität mit einem Attributwert assoziiert ist.

15. Das Verfahren gemäß Anspruch 14, wobei die erste Nachricht die Client-Dienst-Identität in einer Sitzungsprotokollschicht oder darüber enthält, wobei das Verfahren weiter ein Extrahieren der Client-Dienst-Identität an der Sitzungsprotokollschicht oder darüber aufweist.

16. Das Verfahren gemäß Anspruch 15, wobei die Client-Dienst-Identität in einem eingebettet ist aus:
ein Uniform Resource Identifier; und
ein Uniform Resource Locator.

17. Das Verfahren gemäß Anspruch 15, wobei die Client-Dienst-Identität in einem Host-Anforderungs-Header einer HTTP-Nachricht eingebettet ist.

18. Das Verfahren gemäß Anspruch 17, wobei die Client-Dienst-Identität ein voll qualifizierter Domain-Name (FQDN - Fully Qualified Domain Name) ist, und die DNS-Auflösung der Client-Dienst-Identität die IP-Adresse des TCP-TURN-Servers (514) zurückgibt.

19. Das Verfahren gemäß Anspruch 15, wobei der TCP-TURN-Server (514) die Nachricht puffert, die die eingebettete Client-Dienst-Identität hat, und die gepufferte Nachricht an den Computer-Client (510) sendet bei einem Binden der Datenverbindung (640, 740) und der Peer-Verbindung.

20. Das Verfahren gemäß Anspruch 6, wobei die Anforderung, die an dem TURN-Server (514) empfangen wird, eine Angabe umfasst, dass der Computer-Client (510) bevorzugt, dass ihm die Client-Dienst-Identität zugewiesen wird anstelle einer Anschlussnummer.

21. Das Verfahren gemäß Anspruch 6, das weiter ein Bekanntmachen der Client-Dienst-Identität für zumindest eine Peer-Computervorrichtung (120) aufweist.

22. Das Verfahren gemäß Anspruch 21, wobei das Bekanntmachen ein Empfangen einer Abfrage von der zumindest einen Peer-Computervorrichtung (120) und Vorsehen der Client-Dienst-Identität an die zumindest eine Peer-Computervorrichtung (120) aufweist.

23. Das Verfahren gemäß Anspruch 6, das weiter aufweist ein Annehmen einer Peer-Verbindung (720) mit einer Peer-Computervorrichtung (716), Empfangen einer ersten Nachricht mit der Client-Dienst-Identität von der Peer-Computervorrichtung (716), und Senden einer Verbindungsversuchanforderung (730) an den Computer-Client (710), der durch die Client-Dienst-Identität identifiziert wird.

24. Das Verfahren gemäß Anspruch 23, wobei die Peer-Verbindung (720) an dem ersten Anschluss angenommen wird.

25. Das Verfahren gemäß Anspruch 23, wobei die Peer-Verbindung (720) an einem zweiten Anschluss angenommen wird, wobei der zweite Anschluss fähig ist zum Durchqueren einer Firewall (122) zwischen dem TURN-Server (714) und der Peer-Computervorrichtung (716).

26. Das Verfahren gemäß Anspruch 6, das weiter ein Empfangen einer Verbindungsanforderung (622) an dem TCP-TURN-Server (614) von einem Computer-Client (610) aufweist, wobei die Verbindungsanforderung (622) eine Adresse für eine Peer-Computervorrichtung (616) enthält und der TCP-TURN-Server (614) einen nicht-spezifizierten Quellenanschluss zum Herstellen einer TCP-Verbindung (630) zu dem Peer (616) verwendet.

27. Das Verfahren gemäß Anspruch 23, wobei das Netzwerk, auf dem sich der Peer (120) befindet, ein restriktives Zugangs-IP-Netzwerk ist.

28. Das Verfahren gemäß Anspruch 6, wobei der TCP-TURN-Server (114) eine Vielzahl von Clients (110) und eine Vielzahl von Peers (120, 130) versorgen kann mit einem aus:
ein Anschluss, und
zwei Anschlüsse.

29. Ein TCP-TURN(Traversal Using Relays Around Network Address Translator)-Server (910), der aufweist:
einen Prozessor (920);
ein Kommunikationsteilsystem (930),
wobei der TCP-TURN-Server (910) ausgebildet ist zum Durchführen des Verfahrens gemäß einem der Ansprüche 7 bis 30.

## Revendications

1. Procédé au niveau d'un client informatique (510) situé derrière un traducteur d'adresses réseau, NAT, et un pare-feu (512), le procédé comprenant le fait :
d'établir une connexion de commande (520) avec un serveur (514) de protocole de commande de transmission, TCP, de Traversée au Moyen de Relais Autour de NAT, TURN, en utilisant un port capable de traverser le pare-feu (512) ;
de demander (530) une attribution d'une identité de service client à partir du serveur TCP TURN (514) ; et
de recevoir, depuis le serveur TCP TURN (514), une réponse (542) contenant l'identité de service client,
dans lequel l'identité de service client est indépendante d'un port quelconque utilisé pour communiquer avec le serveur TCP TURN (514), et dans lequel l'identité de service client identifie au moins l'un parmi le client informatique (510) et un service sur le client informatique (510) pour le serveur TCP TURN (514).

2. Procédé de la revendication 1, dans lequel la demande (530) comporte le fait d'indiquer au serveur TCP TURN (514) que le client informatique (510) préfère se faire attribuer l'identité de service client plutôt qu'un numéro de port.

3. Procédé de la revendication 1, dans lequel la réception comporte le fait de déterminer si la réponse (542) comporte l'identité de service client.

4. Procédé de la revendication 1, comprenant en outre le fait d'annoncer l'identité de service client à au moins un dispositif informatique homologue (120, 130).

5. Dispositif informatique (910) comprenant :
un processeur (920) ; et
un sous-système de communications (930),
dans lequel le dispositif informatique (910) est situé derrière un traducteur d'adresses réseau, NAT, et un parefeu (112) et est adapté pour mettre en oeuvre le procédé de l'une quelconque des revendications 1 à 4.

6. Procédé au niveau d'un serveur (514) TCP de Traversée au Moyen de Relais Autour de Traducteur d'Adresses Réseau, TURN, le procédé comprenant le fait :
d'effectuer une écoute sur un premier port pour des communications provenant d'un client informatique (510), le client informatique (510) étant derrière un pare-feu (512) et le premier port capable de traverser le pare-feu (512) ;
d'accepter une connexion de commande (520) avec le client informatique (510) sur le premier port ;
de recevoir une demande (532) pour l'attribution d'une identité de service client depuis le client informatique (510) ; et
d'envoyer une réponse (540) contenant l'identité de service client,
dans lequel l'identité de service client est indépendante d'un port quelconque utilisé pour communiquer avec le serveur TCP TURN (514), et dans lequel l'identité de service client identifie au moins l'un parmi le client informatique (510) et un service sur le client informatique (510) pour le serveur TCP TURN (514).

7. Procédé de la revendication 6, dans lequel la connexion de commande (520) entre le client informatique (510) et le serveur TURN (514) utilise le même port sur le serveur TURN (514) en tant que connexions de données et connexions homologues.

8. Procédé de la revendication 7, dans lequel un premier message après établissement de connexion au niveau du serveur TCP TURN (514) détermine un type de connexion.

9. Procédé de la revendication 8, dans lequel, si le premier message est une demande d'attribution (532), le type de connexion est une connexion de commande.

10. Procédé de la revendication 8, dans lequel, si le premier message est une demande de liaison de connexion (662, 752) alors le type de connexion est une connexion de données.

11. Procédé de la revendication 8, dans lequel le type de connexion est une connexion homologue si le premier message n'est pas l'un parmi :
une demande d'attribution (532) et
une demande de liaison de connexion (662, 752).

12. Procédé de la revendication 11, dans lequel, si le premier message identifie une connexion homologue, le premier message contient l'identité de service client.

13. Procédé de la revendication 12, dans lequel le premier message est l'identité de service client.

14. Procédé de la revendication 13, dans lequel l'identité de service client est associée à une valeur d'attribut.

15. Procédé de la revendication 14, dans lequel le premier message contient l'identité de service client dans une couche de protocole de session ou au-dessus, le procédé comprenant en outre l'extraction de l'identité de service client au niveau de la couche de protocole de session ou au-dessus.

16. Procédé de la revendication 15, dans lequel l'identité de service client est intégrée dans l'un parmi :
un identificateur de ressource uniforme ; et
un localisateur de ressource uniforme.

17. Procédé de la revendication 15, dans lequel l'identité de service client est intégrée dans un en-tête de demande d'hôte d'un message HTTP.

18. Procédé de la revendication 17, dans lequel l'identité de service client est un nom de domaine complet, FQDN, et la résolution DNS de l'identité de service client renvoie l'adresse IP du serveur TCP TURN (514).

19. Procédé de la revendication 15, dans lequel le serveur TCP TURN (514) met en mémoire tampon le message intégrant l'identité de service client et envoie le message mis en mémoire tampon au client informatique (510) lors de la liaison de la connexion de données (640, 740) et de la connexion homologue.

20. Procédé de la revendication 6, dans lequel la demande reçue au niveau du serveur TURN (514) comporte une indication que le client informatique (510) préfère se faire attribuer l'identité de service client plutôt qu'un numéro de port.

21. Procédé de la revendication 6, comprenant en outre le fait d'annoncer l'identité de service client à au moins un dispositif informatique homologue (120).

22. Procédé de la revendication 21, dans lequel l'annonce comprend le fait de recevoir une demande provenant de l'au moins un dispositif informatique homologue (120) et de fournir l'identité de service client à l'au moins un dispositif informatique homologue (120).

23. Procédé de la revendication 6, comprenant en outre le fait d'accepter une connexion homologue (720) avec un dispositif informatique homologue (716), de recevoir un premier message avec l'identité de service client à partir du dispositif informatique homologue (716), et d'envoyer une demande de tentative de connexion (730) au client informatique (710) identifié par l'identité de service client.

24. Procédé de la revendication 23, dans lequel la connexion homologue (720) est acceptée sur le premier port.

25. Procédé de la revendication 23, dans lequel la connexion homologue (720) est acceptée sur un deuxième port, dans lequel le deuxième port est capable de traverser un pare-feu (122) entre le serveur (714) de TURN et le dispositif informatique homologue (716).

26. Procédé de la revendication 6, comprenant en outre le fait de recevoir une demande de connexion (622) au niveau du serveur (614) de TCP TURN à partir d'un client informatique (610), la demande de connexion (622) contenant une adresse pour un dispositif informatique homologue (616) et le serveur (614) de TCP TURN utilise un port source non spécifié pour établir une connexion TCP (630) avec l'homologue (616).

27. Procédé de la revendication 23, le réseau sur lequel l'homologue (120) se trouve est un réseau IP à accès restreint.

28. Procédé de la revendication 6, le serveur (114) de TCP TURN peut servir une pluralité de Clients (110) et une pluralité d'Homologues (120, 130) avec l'un parmi :
un port et
deux ports.

29. Serveur (910) TCP de Traversée au Moyen de Relais Autour de Traducteur d'Adresses Réseau, TURN, comprenant :
un processeur (920) ;
un sous-système de communications (930),
dans lequel le serveur (910) de TCP TURN est adapté pour mettre en oeuvre le procédé de l'une quelconque des revendications 7 à 28.
